(19) Europäisches Patentamt
European Patent Office
Office européen des brevets

(11) EP 4 520 793 A1

(12) EUROPEAN PATENT APPLICATION
published in accordance with Art. 153(4) EPC

(43) Date of publication:
**12.03.2025 Bulletin 2025/11**

(21) Application number: **23799419.9**

(22) Date of filing: **29.03.2023**

(51) International Patent Classification (IPC):
***C08L 69/00*** *(2006.01)* ***C08G 64/06*** *(2006.01)*

(52) Cooperative Patent Classification (CPC):
**C08G 64/06; C08L 69/00**

(86) International application number:
**PCT/JP2023/012893**

(87) International publication number:
**WO 2023/214487 (09.11.2023 Gazette 2023/45)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.05.2022 JP 2022076313**

(71) Applicant: **Mitsubishi Chemical Corporation**
**Tokyo 100-8251 (JP)**

(72) Inventors:
- **IRIE Yasuyuki**
  **Hiratsuka-shi, Kanagawa 254-0016 (JP)**
- **HAMAGUCHI Ryuki**
  **Hiratsuka-shi, Kanagawa 254-0016 (JP)**
- **NISHINO Yohei**
  **Hiratsuka-shi, Kanagawa 254-0016 (JP)**

(74) Representative: **Vossius & Partner**
**Patentanwälte Rechtsanwälte mbB**
**Siebertstrasse 3**
**81675 München (DE)**

# (54) RESIN COMPOSITION, MOLDED ARTICLE, AND METHOD FOR PRODUCING RESIN COMPOSITION

(57) To provide a resin composition, contains: a polycarbonate resin (A) comprising a constitutional unit represented by the formula (1); and a polycarbonate resin (B) comprising a constitutional unit represented by the formula (2), wherein the polycarbonate resin (A) is a recycled product; and a content of Br element in the polycarbonate resin (A) is, with respect to 100 parts by mass of the polycarbonate resin (A), 10 ppm by mass or lower.

EP 4 520 793 A1

## Description

[Technical Field]

The present invention relates to a resin composition, a molded article, and a method for producing a resin composition.

The present invention relates particularly to a resin composition having a polycarbonate resin as a major component.

[Background Art]

Polycarbonate resins are excellent in mechanical strengths, electric properties, transparency and the like, and are broadly utilized as engineering plastics in various fields such as electric and electronic device fields and automobile fields.

Meanwhile, in recent years, resource recycling has been expressly stated and also on polycarbonate resins, recycling has been studied (Patent Literature 1, Patent Literature 2, and the like).

[Citation List]

[Patent Literature]

Patent Literature 1
Japanese Patent Laid-Open No. 2001-226576
Patent Literature 2
International Publication No. WO2000/029461

[Summary of the Invention]

[Technical Problem]

Here, from the viewpoint of raising the hardness of a bisphenol A type polycarbonate resin being a general-purpose polycarbonate resin, a bisphenol C type polycarbonate resin or the like is blended in some cases.

It has been found that in such a blend of a bisphenol A type polycarbonate resin and a bisphenol C type polycarbonate resin, when a recycled product is used as the bisphenol A type polycarbonate resin, the color difference after heat treatment largely rises.

The present invention aims at solving such a problem, and has an object to provide a resin composition comprising a polycarbonate resin (A): being a polycarbonate resin comprising a constitutional unit represented by the formula (1) described later typified by a bisphenol A type polycarbonate resin, and comprising a recycled product; and a polycarbonate resin (B) comprising a constitutional unit represented by the formula (2) described later typified by a bisphenol C type polycarbonate resin, wherein the rise in the color difference after heat treatment of the resin composition is suppressed, a molded article, and a method for producing a resin composition.

[Solution to Problem]

The present inventors addressed the above-mentioned problems and discovered that the above problems could be solved by using, as the polycarbonate resin comprising the constitutional unit represented by the formula (1), one having a low content of Br element.

Specifically, the problems described above are solved by the following means.

<1> A resin composition, comprising:

a polycarbonate resin (A) comprising a constitutional unit represented by the formula (1); and
a polycarbonate resin (B) comprising a constitutional unit represented by the formula (2),
wherein the polycarbonate resin (A) is a recycled product; and
a content of Br element in the polycarbonate resin (A) is, with respect to 100 parts by mass of the polycarbonate resin (A), 10 ppm by mass or lower:

the formula (1)

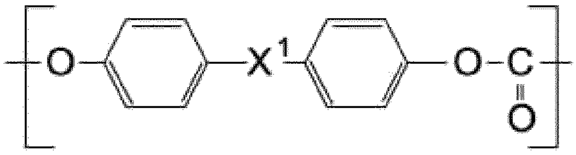

wherein $X^1$ represents either one of the following formulae:

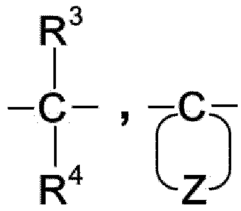

wherein $R^3$ and $R^4$ each independently represent a hydrogen atom or a methyl group; and Z represents a group to be bonded with C to form an alicyclic hydrocarbon having 6 to 12 carbon atoms and optionally having a substituent; and
the formula (2)

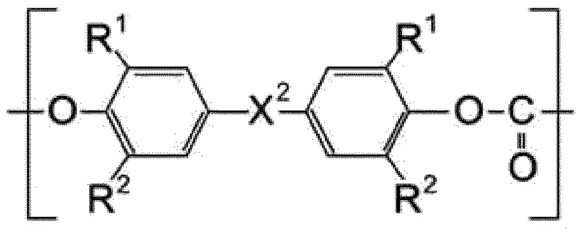

wherein $R^1$ represents a methyl group; $R^2$ represents a hydrogen atom or a methyl group; and $X^2$ represents either one of the following formulae:

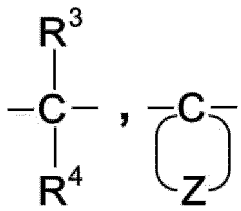

wherein $R^3$ and $R^4$ each independently represent a hydrogen atom or a methyl group; and Z represents a group to be bonded with C to form an alicyclic hydrocarbon having 6 to 12 carbon atoms and optionally having a substituent.

<2> The resin composition according to <1>, wherein the polycarbonate resin (A) comprises P element.
<3> The resin composition according to <2>, wherein a mass ratio of Br element/P element in the polycarbonate resin (A) is 0 to 1.0.
<4> The resin composition according to any one of <1> to <3>, wherein the polycarbonate resin (A) comprises Fe element.
<5> The resin composition according to any one of <1> to <4>, wherein the polycarbonate resin (A) comprises Si element.
<6> The resin composition according to any one of <1> to <5>, wherein in the formula (2), $R^2$ is a hydrogen atom; $X^2$ is

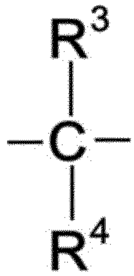

, and $R^3$ and $R^4$ are methyl groups.

<7> A pellet of the resin composition according to any one of <1> to <6>.

<8> A molded article, being formed from the resin composition according to any one of <1> to <6>.

<9> method for producing a resin composition, comprising

melt kneading a polycarbonate resin (A) comprising a constitutional unit represented by the formula (1); and a polycarbonate resin (B) comprising a constitutional unit represented by the formula (2),
wherein the polycarbonate resin (A) is a recycled product; and
a content of Br element in the polycarbonate resin (A) is, with respect to 100 parts by mass of the polycarbonate resin (A), 10 ppm by mass or lower:

the formula (1)

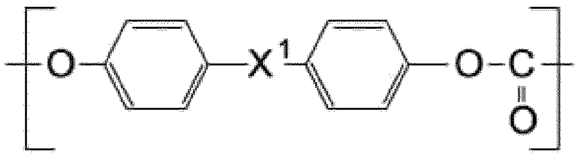

wherein $X^1$ represents either one of the following formulae:

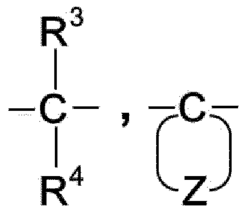

wherein $R^3$ and $R^4$ each independently represent a hydrogen atom or a methyl group; and Z represents a group to be bonded with C to form an alicyclic hydrocarbon having 6 to 12 carbon atoms and optionally having a substituent; and
the formula (2)

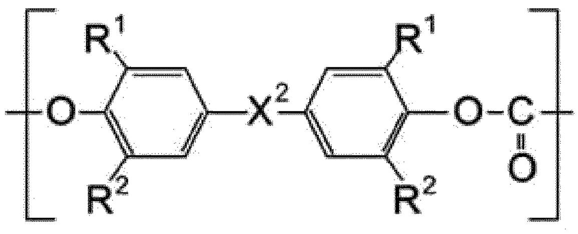

wherein $R^1$ represents a methyl group; $R^2$ represents a hydrogen atom or a methyl group; and $X^2$ represents either one of the following formulae:

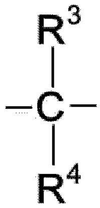 , 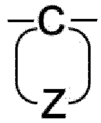

wherein $R^3$ and $R^4$ each independently represent a hydrogen atom or a methyl group; and Z represents a group to be bonded with C to form an alicyclic hydrocarbon having 6 to 12 carbon atoms and optionally having a substituent.

<10> A method for producing the resin composition according to any one of <1> to <6>, comprising

melt kneading a polycarbonate resin (A) comprising a constitutional unit represented by the formula (1); and a polycarbonate resin (B) comprising a constitutional unit represented by the formula (2),
wherein the polycarbonate resin (A) is a recycled product; and
a content of Br element in the polycarbonate resin (A) is, with respect to 100 parts by mass of the polycarbonate resin (A), 10 ppm by mass or lower.

[Advantageous Effects of Invention]

The present invention has enabled providing a resin composition comprising a polycarbonate resin (A) being a polycarbonate resin comprising a constitutional unit represented by the formula (1) typified by a bisphenol A type polycarbonate resin, and being a recycled product, and a polycarbonate resin (B) comprising a constitutional unit represented by the formula (2) typified by a bisphenol C type polycarbonate resin, wherein the resin composition is suppressed in the rise in the color difference after heat treatment, a molded article, and a method for producing a resin composition.

[Description of Embodiments]

Hereinafter, embodiments in order to carry out the present invention (hereinafter, referred to simply as "the present embodiments") will be interpreted in detail. Then, the following present embodiments are exemplifications in order to interpret the present invention, and the present invention is not limited only to the present embodiments.
In the present description, "to" is used in the meaning of including numerical values described before and after the "to" as a lower limit value and an upper limit value, respectively.
In the present description, values of various physical properties and values of various properties are, unless otherwise specified, those at 23°C.
In the present description, ppm means ppm by mass.
In the case where measurement methods and the like described in some standards indicated in the present description depend on years, unless otherwise specified, the methods and the like are based on standards at the time point of January 1, 2022.
A resin composition of the present embodiments comprises a polycarbonate resin (A) comprising a constitutional unit represented by the formula (1), and a polycarbonate resin (B) comprising a constitutional unit represented by the formula (2), wherein the polycarbonate resin (A) is a recycled product, and the content of Br element in the polycarbonate resin (A) is, with respect to 100 parts by mass of the polycarbonate resin (A), 10 ppm by mass or lower.
The formula (1)

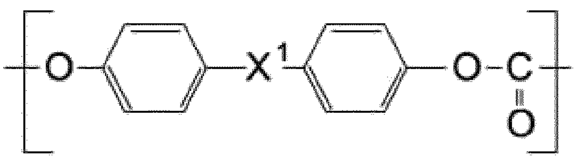

wherein $X^1$ represents either one of the following formulae:

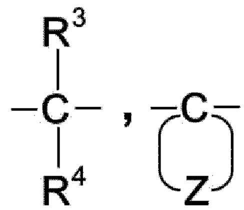

wherein $R^3$ and $R^4$ each independently represent a hydrogen atom or a methyl group; and Z represents a group to be bonded with C to form an alicyclic hydrocarbon having 6 to 12 carbon atoms and optionally having a substituent; and the formula (2)

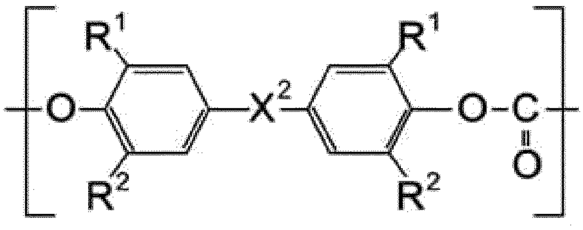

wherein $R^1$ represents a methyl group; $R^2$ represents a hydrogen atom or a methyl group; and $X^2$ represents either one of the following formulae:

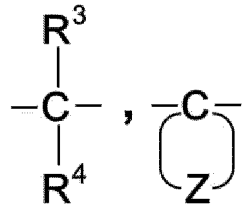

wherein $R^3$ and $R^4$ each independently represent a hydrogen atom or a methyl group; and Z represents a group to be bonded with C to form an alicyclic hydrocarbon having 6 to 12 carbon atoms and optionally having a substituent.

Making such a constitution enables providing a resin composition comprising a polycarbonate resin (A) (hereinafter, referred to simply as "polycarbonate resin (A)" in some cases) being a polycarbonate resin comprising a constitutional unit represented by the formula (1) and being a recycled product, and a polycarbonate resin (B) (hereinafter, referred to simply as "polycarbonate resin (B)" in some cases) comprising a constitutional unit represented by the formula (2), wherein the resin composition is suppressed in the rise in the color difference after heat treatment.

Studies by the present inventor have found that molded articles of a blend of a polycarbonate resin being a recycled product and the polycarbonate resin (B), when being heat treated, easily yellow in some cases. It has been found that for the polycarbonate resin (B), it is problematic that the proportion of Br element contained in the polycarbonate resin being a recycled product is high. That is, polycarbonate resins being recycled products sometimes contain a component originated from a bromine-based flame retardant. Then, bromine-based flame retardants are known to be activated by being used concurrently with a metal oxide typified by antimony trioxide, and more exhibit the effect.

On the other hand, the polycarbonate resin (B) comprising a constitutional unit represented by the formula (2) of a bisphenol C type polycarbonate resin or the like is likely to be more easily discolored than the polycarbonate resin (A) comprising a constitutional unit represented by the formula (1) of a bisphenol A type polycarbonate resin or the like. One reason therefor presumably lies in that in the constitutional unit represented by the formula (2), the benzene ring moiety originated from the bisphenol structure is substituted with a methyl group, and the methyl group is easily radicalized.

Then, it is presumed that when the polycarbonate resin (B) which is easily radicalized contains, for example, a bromine compound originated from a bromine-based flame retardant, a molded article easily yellows. It is presumed that the resin easily yellows particularly by being heated. It is presumed that by making the resin to further contain a metal oxide, the bromine compound and the metal oxide act and yellowing occurs more easily.

In the present embodiments, it is presumed that by adopting, as the polycarbonate resin (A), one having a low content of Br element, the above problem has been enabled to be solved.

<Polycarbonate resin (A)>

The polycarbonate resin to be used in the present embodiments is a polycarbonate resin comprising a constitutional unit represented by the formula (1), is a recycled product, and has a content of Br element therein of 10 ppm by mass or lower with respect to 100 parts by mass of the polycarbonate resin (A).

The polycarbonate resin (A) contains the constitutional unit represented by the formula (1), in the whole of constitutional units, in a proportion of preferably more than 50% by mass, more preferably 55% by mass or more, still more preferably 60% by mass or more, further still more preferably 70% by mass or more, further still more preferably 80% by mass or more, further still more preferably 90% by mass or more and especially preferably 95% by mass or more, and then, preferably 100% by mass or less.

By using the polycarbonate resin (A), yellowing after heat treatment can effectively be suppressed.

The formula (1)

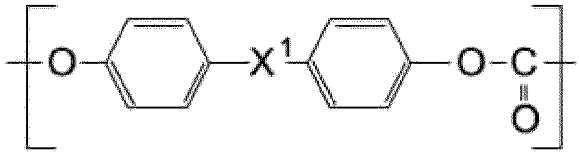

wherein $X^1$ represents either one of the following formulae:

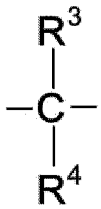 , 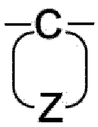

wherein $R^3$ and $R^4$ each independently represent a hydrogen atom or a methyl group; and Z represents a group to be bonded with C to form an alicyclic hydrocarbon having 6 to 12 carbon atoms and optionally having a substituent.

The alicyclic hydrocarbon formed by bonding of Z with C includes cycloalkylidene groups such as a cyclohexylidene group, a cycloheptylidene group, a cyclododecylidene group, an adamantylidene group, and a cyclododecylidene group. The alicyclic hydrocarbon having a substituent formed by bonding of Z with C includes methyl substitution products, ethyl substitution products and the like of the above-mentioned alicyclic hydrocarbon groups. Among these, preferable are a cyclohexylidene group, a methyl substitution product of a cyclohexylidene group (preferably, 3,3,5-trimethyl substitution product) and a cyclododecylidene group.

In the case where in the formula (1), $X^1$ is

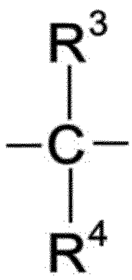

, it is preferable that at least one of $R^3$ and $R^4$ is a methyl group, and it is more preferable that the both are methyl groups.

Then, in the case where $X^1$ is

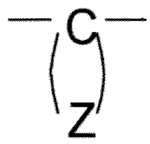

, Z is bonded with carbon C bonded with two phenyl groups in the formula (1) to form a divalent alicyclic hydrocarbon group having 6 to 12 carbon atoms, and examples of the divalent alicyclic hydrocarbon group include cycloalkylidene groups such as a cyclohexylidene group, a cycloheptylidene group, a cyclododecylidene group, an adamantylidene group, and a cyclododecylidene group. Substitution products of the divalent alicyclic hydrocarbon groups include products thereof having a methyl substituent, or an ethyl substituent. Among these, preferable are a cyclohexylidene group, a methyl substitution product of a cyclohexylidene group (preferably, 3,3,5-trimethyl substitution product) and a cyclododecylidene group.

It is preferable that in the formula (1), $X^1$ has the following structure:

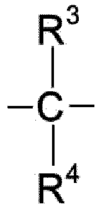

A preferable specific example of the constitutional unit represented by the formula (1) is 2,2-bis(4-hydroxyphenyl)propane, that is, a constitutional unit (carbonate constitutional unit) constituted of bisphenol A.

In the present embodiments, the polycarbonate resin (A) may contain one kind of the constitutional unit represented by the formula (1), or may contain two or more kinds thereof.

In the present embodiments, the polycarbonate resin (A) may contain other constitutional units other than the constitutional unit represented by the formula (1). As the other constitutional units, there are exemplified a constitutional unit represented by the formula (2) described later and constitutional units originated from dihydroxy compounds shown below. Provided that a highest-content constitutional unit in the polycarbonate resin (A) is the constitutional unit represented by the formula (1).

Bis(4-hydroxyphenyl)methane, 2,2-bis(4-hydroxyphenyl)butane, 2,2-bis(4-hydroxyphenyl)pentane, 2,2-bis(4-hydroxyphenyl)-4-methylpentane, 2,2-bis(4-hydroxy-3-methylphenyl)propane, 2,2-bis(4-hydroxy-3,5-dimethylphenyl)propane, 2,2-bis(4-hydroxy-3-(1-methylethyl)phenyl)propane, 2,2-bis(4-hydroxy-3-tert-butylphenyl)propane, 2,2-bis(4-hydroxy-3-(1-methylpropyl)phenyl)propane, 2,2-bis(4-hydroxy-3-cyclohexylphenyl)propane, 2,2-bis(4-hydroxy-3-phenylphenyl)propane, 1,1-bis(4-hydroxyphenyl)decane, 1,1-bis(4-hydroxyphenyl)cyclohexane, 1,1-bis(4-hydroxyphenyl)-1-phenylethane, 1,1-bis(4-hydroxyphenyl)phenylmethane, 1,1-bis(4-hydroxy-3-methylphenyl)cyclohexane, 1,1-bis(4-hydroxy-3,5-dimethylphenyl)cyclohexane, 1,1-bis(4-hydroxy-3-(1-methylethyl)phenyl)cyclohexane, 1,1-bis(4-hydroxy-3-tert-butylphenyl)cyclohexane, 1,1-bis(4-hydroxy-3-(1-methylpropyl)phenyl)cyclohexane, 1,1-bis(4-hydroxy-3-cyclohexylphenyl)cyclohexane, 1,1-bis(4-hydroxy-3-phenylphenyl)cyclohexane, 1,1-bis(4-hydroxy-3-methylphenyl)-1-phenylethane, 1,1-bis(4-hydroxy-3,5-dimethylphenyl)-1-phenylethane, 1,1-bis(4-hydroxy-3-(1-methylethyl)phenyl)-1-phenylethane, 1,1-bis(4-hydroxy-3-tert-butylphenyl)-1-phenylethane, 1,1-bis(4-hydroxy-3-(1-methylpropyl)phenyl)-1-phenylethane, 1,1-bis(4-hydroxy-3-cyclohexylphenyl)-1-phenylethane, 1,1-bis(4-hydroxy-3-phenylphenyl)-1-phenylethane, 1,1-bis(4-hydroxyphenyl)cyclopentane, 1,1-bis(4-hydroxyphenyl)cyclooctane, 4,4'-(1,3-phenylenediisopropylidene)bisphenol, 4,4'-(1,4-phenylenediisopropylidene)bisphenol, 9,9-bis(4-hydroxyphenyl) fluorene, 9,9-bis(4-hydroxy-3-methylphenyl)fluorene, 4,4'-dihydroxybenzophenone, 4,4'-dihydroxyphenyl ether, 4,4'-dihydroxybiphenyl, 1,1-bis(4-hydroxyphenyl)-3,3,5-trimethylcyclohexane, 1,1-bis(4-hydroxy-6-methyl-3-tert-butylphenyl)butane.

Then, as one embodiment of the other constitutional units, the description of paragraph 0008 of International Publication No. WO2017/099226, the descriptions of paragraphs 0048 to 0052 of International Publication No. WO2017/099226 and the description of Japanese Patent Laid-Open No. 2011-046769, can be referred to, and the contents thereof are incorporated in the present description.

The polycarbonate resin (A) to be used in the present embodiments is a recycled product.

The recycled product is a polycarbonate resin originated from molded articles formed from polycarbonate resins, and means a product obtained by subjecting virgin polycarbonate resins to some molding processing, and purports including polycarbonate resin molded articles, rejected polycarbonate resin molded articles, and mill ends formed in production of polycarbonate resin molded articles. The molding-processed products purport including injection molded articles, extrusion molded articles and molded articles formed by other production methods.

Recycled polycarbonate resins include ones obtained by material recycling in which recovered post-consumer

polycarbonate resin molded articles are crushed and alkali cleaned, and reutilized for fibers and the like, ones obtained by chemical recycling (chemical decomposition method), and ones obtained by mechanical recycling.

The chemical recycling is a process in which a recovered post-consumer polycarbonate resin molded article is chemically decomposed to be returned to a raw material level, and then is resynthesized to a polycarbonate resin. On the other hand, the mechanical recycling is means of enabling fouling of polycarbonate resin molded articles to be more securely removed than the material recycling by strictly carrying out the alkali cleaning in the material recycling, carrying out vacuum drying at a high temperature, or otherwise.

A recycled polycarbonate resin can be obtained from post-consumer polycarbonate resin molded articles, for example, by, after foreign matter is removed, crushing and cleaning the molded articles and then pelletizing the resultant by an extruding machine.

Examples of the post-consumer polycarbonate resin molded articles include discs, sheets (including films), meter covers, headlamp lenses and water bottles.

In the polycarbonate resin (A) to be used in the present embodiments, the content of Br element is, with respect to 100 parts by mass of the polycarbonate resin (A), 10 ppm by mass or lower. By making the content of Br element low, when the polycarbonate resin (A) is blended with the polycarbonate resin (B), the activation of radicals of the polycarbonate resin (B) can effectively be suppressed and $\Delta E$ before and after heat treatment can be made low.

The content of Br element in the polycarbonate resin (A) is, with respect to 100 parts by mass of the polycarbonate resin (A), preferably 7 ppm by mass or lower. The lower limit value is ideally 0 ppm by mass, but a substantial lower limit value is probably a detection limit value.

The content of Br element is measured according to the description in Examples described later.

One embodiment of the polycarbonate resin (A) in the present embodiments contains P element. Due to containing P element, $\Delta E$ is likely to more decrease. The P element is originated, for example, from a stabilizer. In the case where the polycarbonate resin (A) contains P element, the content thereof is, with respect to 100 parts by mass of the polycarbonate resin (A), preferably 1 ppm by mass or higher, more preferably 5 ppm by mass or higher, still more preferably 10 parts by mass or higher, further still more preferably 20 ppm by mass or higher and further still more preferably 25 ppm by mass or higher. By making the content to be the above lower limit value or higher, $\Delta E$ is likely to more decrease. Then, the upper limit value of the content of P element is, with respect to 100 parts by mass of the polycarbonate resin (A), preferably 100 ppm by mass or lower, more preferably 90 ppm by mass or lower, still more preferably 80 ppm by mass or lower, further still more preferably 70 ppm by mass or lower, further still more preferably 60 ppm by mass or lower and further still more preferably 50 ppm by mass or lower.

In the present embodiments, the mass ratio of Br element/P element in the polycarbonate resin (A) is preferably 0 or higher, and then, preferably 1.0 or lower, more preferably 0.9 or lower, still more preferably 0.8 or lower, further still more preferably 0.7 or lower and further still more preferably 0.6 or lower.

Another embodiment of the polycarbonate resin (A) in the present embodiments contains Fe element. The Fe element is incorporated, for example, from a kneading machine or a production facility. In the case where the polycarbonate resin (A) contains Fe element, the content is, with respect to 100 parts by mass of the polycarbonate resin (A), preferably 1 ppm by mass or higher, more preferably 5 ppm by mass or higher, still more preferably 10 parts by mass or higher and further still more preferably 13 ppm by mass or higher. Then, the upper limit value of the content of the Fe element is, with respect to 100 parts by mass of the polycarbonate resin (A), preferably 100 ppm by mass or lower, more preferably 80 ppm by mass or lower, still more preferably 60 ppm by mass or lower, further still more preferably 50 ppm by mass or lower, further still more preferably 40 ppm by mass or lower and further still more preferably 30 ppm by mass or lower.

In the above embodiment, the mass ratio of Br element/Fe element in the polycarbonate resin (A) is preferably 0 or higher, and then, preferably 1.0 or lower, more preferably 0.9 or lower and still more preferably 0.8 or lower.

Another embodiment of the polycarbonate resin (A) in the present embodiments contains Si element. The Si element is incorporated, for example, from a kneading machine or a production facility. In the case where the polycarbonate resin (A) contains Si element, the content thereof is, with respect to 100 parts by mass of the polycarbonate resin (A), preferably 5 ppm by mass or higher, more preferably 10 ppm by mass or higher, still more preferably 15 parts by mass or higher and further still more preferably 20 ppm by mass or higher. Then, the upper limit value of the content of Si element is, with respect to 100 parts by mass of the polycarbonate resin (A), preferably 100 ppm by mass or lower, more preferably 90 ppm by mass or lower, still more preferably 80 ppm by mass or lower, further still more preferably 70 ppm by mass or lower and further still more preferably 60 ppm by mass or lower.

In the above embodiment, the mass ratio of Br element/Si element in the polycarbonate resin (A) is preferably 0 or higher, and then, preferably 1.0 or lower, more preferably 0.5 or lower and still more preferably 0.4 or lower.

Another embodiment of the polycarbonate resin (A) in the present embodiments contains no Cl element.

In another embodiment of the polycarbonate resin (A) in the present embodiments, Cl element is contained, with respect to 100 parts by mass of the polycarbonate resin (A), in a proportion of higher than 0 ppm by mass and 100 ppm by mass or lower.

Another embodiment of the polycarbonate resin (A) in the present embodiments contains no Al element.
In another embodiment of the polycarbonate resin (A) in the present embodiments, Al element is contained, with respect to 100 parts by mass of the polycarbonate resin (A), in a proportion of higher than 0 ppm by mass and 10 ppm by mass or lower.
Another embodiment of the polycarbonate resin (A) in the present embodiments contains no S element.
In another embodiment of the polycarbonate resin (A) in the present embodiments, S element is contained, with respect to 100 parts by mass of the polycarbonate resin (A), in a proportion of higher than 0 ppm by mass and 20 ppm by mass or lower.
Another embodiment of the polycarbonate resin (A) in the present embodiments contains no Ca element.
In another embodiment of the polycarbonate resin (A) in the present embodiments, Ca element is contained, with respect to 100 parts by mass of the polycarbonate resin (A), in a proportion of higher than 0 ppm by mass and 30 ppm by mass or lower.
One example of the polycarbonate resin (A) to be used in the present embodiments includes the polycarbonate resin (A) containing the P element, the Fe element and the Si element in the above proportions.
It is preferable that the polycarbonate resin (A) to be used in the present embodiments is a recycled product containing no bromine-based flame retardant.
The lower limit value of the viscosity-average molecular weight (Mv) of the polycarbonate resin (A) to be used in the present embodiments is preferably 5,000 or higher, more preferably 8,000 or higher, still more preferably 10,000 or higher and further still more preferably 12,000 or higher. Then, the upper limit value of Mv is preferably 32,000 or lower, more preferably 30,000 or lower, still more preferably 29,000 or lower and further still more preferably 27,000 or lower.
The pencil hardness of the polycarbonate resin (A) measured according to ISO 15184 is exemplified by 3B to H, and 3B to F is preferable and 2B to H is more preferable. The pencil hardness is measured by a method described in Examples described later (hereinafter, the same applies to the pencil hardness). In the case of containing two or more kinds of the polycarbonate resin (A), it is preferable that the pencil hardness of the mixture is in the above range.

<Polycarbonate resin (B)>

The polycarbonate resin (B) to be used in the present embodiments is a polycarbonate resin comprising the constitutional unit represented by the formula (2). The proportion of the constitutional unit represented by the formula (2) in the polycarbonate resin (B) is, in the whole of constitutional units, in the ascending order of preference, 5% by mass or higher, 15% by mass or higher, 30% by mass or higher, 50% by mass or higher, 55% by mass or higher, 60% by mass or higher, 70% by mass or higher, 80% by mass or higher, 90% by mass or higher and 95% by mass or higher, and then, preferably 100% by mass or lower.
By using the polycarbonate resin (B), molded articles high in the hardness can be obtained.
The formula (2)

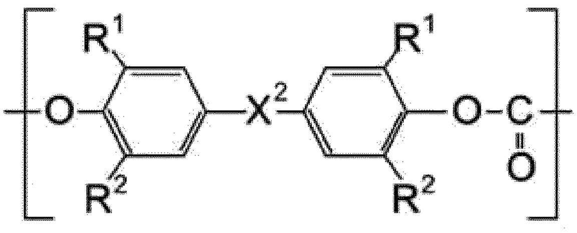

wherein $R^1$ represents a methyl group; $R^2$ represents a hydrogen atom or a methyl group; and $X^2$ represents either one of the following formulae:

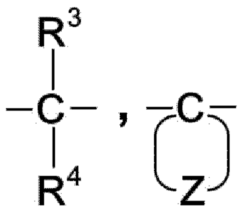

wherein $R^3$ and $R^4$ each independently represent a hydrogen atom or a methyl group; and Z represents a group to be bonded with C to form an alicyclic hydrocarbon having 6 to 12 carbon atoms and optionally having a substituent.
Two $R^2$ in the formula (2) may be identical or different, and are preferably identical. $R^2$ are preferably hydrogen

atoms.

In the case where in the formula (2), $X^2$ is

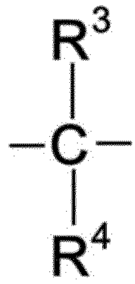

, it is preferable that at least one of $R^3$ and $R^4$ is a methyl group, and it is more preferable that the both are methyl groups.

Then, in the case where $X^2$ is

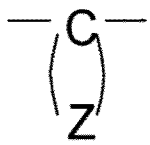

, Z is bonded with carbon C bonded with two phenyl groups in the formula (2) to form a divalent alicyclic hydrocarbon group having 6 to 12 carbon atoms, and examples of the divalent alicyclic hydrocarbon group include cycloalkylidene groups such as a cyclohexylidene group, a cycloheptylidene group, a cyclododecylidene group, an adamantylidene group, and a cyclododecylidene group. Substitution products of the divalent alicyclic hydrocarbon groups include products thereof having a methyl substituent, or an ethyl substituent. Among these, preferable are a cyclohexylidene group, a methyl substitution product of a cyclohexylidene group (preferably, 3,3,5-trimethyl substitution product) and a cyclododecylidene group.

It is preferable that in the formula (2), $X^2$ has the following structure:

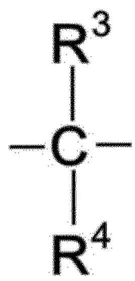

In the present embodiments, it is especially preferable to use the polycarbonate resin comprising the constitutional unit in which in the formula (2), $R^2$ is a hydrogen atom; $X^2$ is

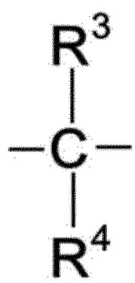

; and $R^3$ and $R^4$ are methyl groups.

In the present embodiments, the polycarbonate resin (B) may contain one kind of the constitutional unit represented by the formula (2), or may contain two or more kinds thereof.

In the present embodiments, in the polycarbonate resin (B), as described above, the constitutional unit

represented by the formula (2) may be contained in 100% by mass, but other constitutional units may be contained. Provided that a highest-content constitutional unit in the polycarbonate resin (B) is the constitutional unit represented by the formula (2).

As the other constitutional units, the constitutional unit represented by the formula (1) and the other constitutional units described in paragraphs of the polycarbonate resin (A) are exemplified.

The lower limit value of the viscosity-average molecular weight (Mv) of the polycarbonate resin (B) to be used in the present embodiments is preferably 5,000 or higher, more preferably 8,000 or higher, still more preferably 10,000 or higher and further still more preferably 12,000 or higher. Then, the upper limit value of Mv is preferably 32,000 or lower, more preferably 30,000 or lower, still more preferably 29,000 or lower and further still more preferably 28,000 or lower.

The viscosity-average molecular weight (Mv) of the polycarbonate resin is determined by using methylene chloride as a solvent, determining the limiting viscosity ($\eta$) (unit: dL/g) at a temperature of 20°C by using an Ubbelohde viscometer, and calculating $\eta$ from the following Schnell's viscosity formula:

$$\eta = 1.23 \times 10^{-4}\ Mv^{0.83}$$

The pencil hardness of the polycarbonate resin (B) measured according to ISO 15184 is exemplified by HB to 3H, and H to 2H is preferable and 2H is more preferable. The pencil hardness is measured by a method described in Examples described later (hereinafter, the same applies to the pencil hardness). In the case of containing two or more kinds of the polycarbonate resin (B), it is preferable that the pencil hardness of the mixture is in the above range.

The polycarbonate resin (B) to be used in the present embodiments may be a virgin product, or may be a recycled product, but a virgin product is preferable.

The virgin product refers to a polycarbonate resin which is not a recycled product.

<Polycarbonate resins contained in the resin composition>

In the resin composition of the present embodiments, the proportion of the polycarbonate resin (A) is, with respect to 100 parts by mass of the total of the polycarbonate resin (A) and the polycarbonate resin (B), preferably 5 parts by mass or higher, more preferably 10 parts by mass or higher, still more preferably 20 parts by mass or higher, further still more preferably 35 parts by mass or higher, further still more preferably 40 parts by mass or higher, further still more preferably 50 parts by mass or higher and especially preferably 60 parts by mass or higher. By making the proportion to be the above lower limit values or higher, $\Delta E$ is likely to be enabled to be made lower. Then, the upper limit value of the proportion of the polycarbonate resin (A) is, with respect to 100 parts by mass of the total of the polycarbonate resin (A) and the polycarbonate resin (B), preferably 95 parts by mass or lower, more preferably 90 parts by mass or lower, still more preferably 80 parts by mass or lower, further still more preferably 75 parts by mass or lower and further still more preferably 70 parts by mass or lower. By making the proportion to be the above upper limit values or lower, the hardness of obtained molded articles is likely to be improved.

The resin composition of the present embodiments may contain only one kind of each of the polycarbonate resin (A) and the polycarbonate resin (B), or may contain two or more kinds thereof. In the case of containing two or more kinds of the polycarbonate resin (A) and/or the polycarbonate resin (B), it is preferable that each total amount falls within the above range.

The resin composition of the present embodiments may contain another polycarbonate resin (hereinafter, referred to as "polycarbonate resin (C)" in some cases) other than the polycarbonate resin (A) and the polycarbonate resin (B).

As the polycarbonate resin (C), a virgin polycarbonate resin other than the polycarbonate resin (B) is exemplified, and it is preferable that the polycarbonate resin (C) is a polycarbonate resin which contains the constitutional unit represented by the formula (1), in the whole of constitutional units, usually in a proportion of higher than 50% by mass (preferably 55% by mass or higher, more preferably 60% by mass or higher, still more preferably 70% by mass or higher, further still more preferably 80% by mass or higher, further still more preferably 90% by mass or higher and further still more preferably 95% by mass or higher, and then, preferably 100 % by mass or lower), and which is a virgin product.

In the case where the resin composition of the present embodiments contains the polycarbonate resin (C), the content rate in the resin composition is preferably lower than 50% by mass, more preferably 45% by mass or lower and still more preferably 40% by mass or lower, and further, may be 25% by mass or lower, 15% by mass or lower, 5% by mass or lower, 3% by mass or lower, or 1% by mass or lower.

The resin composition of the present embodiments may contain only one kind of the polycarbonate resin (C), or may contain two or more kinds thereof.

In the resin composition of the present embodiments, the total content of the polycarbonate resin (A), the polycarbonate resin (B) and the polycarbonate resin (C) accounts for, in the resin composition, preferably 85% by mass or

higher, more preferably 90% by mass or higher, still more preferably 95% by mass or higher, further still more preferably 97% by mass or higher and further still more preferably 98% by mass or higher, and then, may be 100% by mass or lower.

<Other components>

The resin composition of the present embodiments, as required, may contain other components other than the above unless remarkably impairing desired various physical properties. Examples of the other components include thermoplastic resins (for example, acrylic resins) other than the polycarbonate resin (A), and various types of resin additives.
Examples of the resin additives include mold release agents, stabilizers (thermostabilizers, antioxidants and the like), ultraviolet absorbents, antistatic agents, flame retardants, flame retardant aids, dyes, pigments, anticlouding agents, antiblocking agents, fluidity improvers, plasticizers, dispersants, and antibacterial agents. Then, the resin additives may be contained in one kind, or may be contained in an optional combination and ratio of two or more kinds.
As the antistatic agents, the description of paragraphs 0063 to 0067 of Japanese Patent Laid-Open No. 2016-216534 can be referred to, and the contents thereof are incorporated in the present description.
As the flame retardants, the descriptions of paragraphs 0068 to 0075 of Japanese Patent Laid-Open No. 2016-216534 can be referred to, the contents thereof are incorporated in the present description.

<<Mold release agent>>

The resin composition of the present embodiments may contain a mold release agent.
Examples of the mold release agent include aliphatic carboxylic acids, salts of aliphatic carboxylic acids, esters of an aliphatic carboxylic acid and an alcohol, aliphatic hydrocarbon compounds having a number-average molecular weight of 200 to 15,000, polysiloxane-based silicone oils, ketone waxes and Light Amides, and preferable are aliphatic carboxylic acids, salts of aliphatic carboxylic acids, esters of an aliphatic carboxylic acid and an alcohol.
For the detail of the mold release agent, the descriptions of paragraphs 0055 to 0061 of Japanese Patent Laid-Open No. 2018-095706 can be referred to, and the contents thereof are incorporated in the present description.
In the case where the resin composition of the present embodiments contains the mold release agent, the content thereof is, in the resin composition, preferably 0.05 to 3 % by mass, more preferably 0.1 to 0.8% by mass and still more preferably 0.1 to 0.6% by mass.
The resin composition of the present embodiments may contain only one kind of the mold release agent, or may contain two or more kinds thereof. In the case of containing two or more kinds, it is preferable that the total amount falls withing the above range.

<<Stabilizer>>

The resin composition of the present embodiments may contain a stabilizer.
The stabilizer includes thermostabilizers and antioxidants.
The stabilizer includes phenol-based stabilizers, amine-based stabilizers, phosphorus-based stabilizers, and thioether-based stabilizers. Among these, in the present embodiments, phosphorus-based stabilizers and phenol-based stabilizers are preferable.
As the phosphorus-based stabilizers, any well-known ones can be used. Specific examples include oxo-acids of phosphorus, such as phosphoric acid, phosphonic acid, phosphorous acid, phosphinic acid and polyphosphoric acid; acidic pyrophosphoric acid metal salts such as disodium acid pyrophosphate, potassium acid pyrophosphate and calcium acid pyrophosphate; phosphate salts of group I or group II metals, such as potassium phosphate, sodium phosphate, cesium phosphorate and zinc phosphate; and organophosphate compounds, organophosphite compounds, and organophosphonite compounds, but organophosphite compounds are especially preferable.
The organophosphite compounds include triphenyl phosphite, tris(monononylphenyl)phosphite, tris(monononyl/dinonylphenyl)phosphite, tris(2,4-di-tert-butylphenyl) phosphite, monooctyl diphenyl phosphite, dioctyl monophenyl phosphite, monodecyl diphenyl phosphite, didecyl monophenyl phosphite, tridecyl phosphite, trilauryl phosphite, tristearyl phosphite, and 2,2-methylenebis(4,6-di-tert-butylphenyl)octyl phosphite.
Specific examples of such organophosphite compounds include "ADK stab(R), (the same applies hereinafter) 1178", "ADK stab 2112", and "ADK stab HP-10", manufactured by Adeka Corp., "JP-351", "JP-360", and "JP-3CP", manufactured by Johoku Chemical Co. Ltd., and "Irgafos(R), (the same applies hereinafter) 168", manufactured by BASF AG.
As the phenol-based stabilizers, hindered phenol-based stabilizers are preferably used. Specific examples of the hindered phenol-based stabilizers include pentaerythritol tetrakis[3-(3,5-di-tert-butyl-4-hydroxyphenyl)propionate], octadecyl-3-(3,5-ditert-butyl-4-hydroxyphenyl)propionate, thiodiethylene bis[3-(3,5-di-tert-butyl-4-hydroxyphenyl)propionate], N,N'-hexane-1,6-diylbis[3-(3,5-di-tert-butyl-4-hydroxyphenyl)propionamide], 2,4-dimethyl-6-(1-methylpentadecyl)phenol, diethyl[[3,5-bis(1,1-dimethyl-ethyl)-4-hydroxyphenyl]methyl]phosphate, 3,3',3",5,5',5"-hexa-tert-butyl-a,a',a"-(mesitylene-2,4,6-triyl)tri-p-cresol, 4,6-bis(octylthiomethyl)-o-cresol, ethylene bis(oxyethylene)bis[3-(5-tert-butyl-4-hydroxy-m-tolyl)propionate], hexamethylene bis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 2,6-di-tert-butyl-4-(4,6-bis(octylthio)-1,3,5-triazin-2-ylamino)phenol, 2-[1-(2-hydroxy-3,5-di-tert-pentylphenyl)ethyl]-4,6-di-tert-pentylphenyl acrylate.

Among these, preferable are pentaerythritol tetrakis[3-(3,5-di-tert-butyl-4-hydroxyphenyl)propionate] and octadecyl-3-(3,5-di-tert-butyl-4-hydroxyphenyl)propionate. Specific examples of such hindered phenol-based stabilizers include "Irganox(R), (the same applies hereinafter) 1010" and "Irganox 1076", manufactured by BASF AG, and "ADK stab AO-50" and "ADK stab AO-60", manufactured by Adeka Corp.

The content of the stabilizer in the resin composition of the present embodiments is, with respect to 100 parts by mass of the total of the polycarbonate resin (A), the polycarbonate resin (B) and the polycarbonate resin (C), usually 0.001 part by mass or higher, and preferably 0.005 part by mass or higher and more preferably 0.01 part by mass or higher, and then, usually 1 part by mass or lower, preferably 0.5 part by mass or lower and more preferably 0.3 part by mass or lower. By making the content of the stabilizer to be in the above range, the effect of adding the stabilizer can more effectively be exhibited.

The resin composition of the present embodiments may contain only one kind of the stabilizer, or may contain two or more kinds. In the case of containing two or more kinds, it is preferable that total amount falls within the above range.

<<Ultraviolet absorbent>>

The resin composition of the present embodiments may contain an ultraviolet absorbent.

The ultraviolet absorbent includes, as preferable ones, benzotriazole-based ultraviolet absorbents, benzoxazine-based ultraviolet absorbents, triazine-based ultraviolet absorbents and malonate-based ultraviolet absorbents, and benzotriazole-based ones are preferable.

Examples of the benzotriazole-based ultraviolet absorbents include 2-(2-hydroxy-5-methylphenyl)-2H-benzotriazole, 2-(2-hydroxy-3,5-di-tert-butylphenyl)-2H-benzotriazole, 2-(2-hydroxy-3-tert-butyl-5-methylphenyl)-2H-benzotriazole, 2-(2-hydroxy-5-tert-octylphenyl)-2H-benzotriazole, 2-(3,5-di-tert-octyl-2-hydroxyphenyl)-2H-benzotriazole, 2-(3,5-di-tert-amyl-2-hydroxyphenyl)-2H-benzotriazole, 2-(3-lauryl-5-methyl-2-hydroxyphenyl)-2H-benzotriazole, 2-(3,5-di-tert-butyl-2-hydroxyphenyl)-5-chloro-2H-benzotriazole, 2-(3-tert-butyl-5-methyl-2-hydroxyphenyl)-5-chloro-2H-benzotriazole, 2-(3,5-bis(1-methyl-1-phenylethyl)-2-hydroxyphenyl)-2H-benzotriazole, bis(3-(2H-benzotriazol-2-yl)-2-hydroxy-5-methylphenyl)methane, bis(3-(2H-benzotriazol-2-yl)-2-hydroxy-5-(1,1,3,3-tetramethylbutyl)phenyl) methane, bis(3-(2H-benzotriazol-2-yl)-2-hydroxy-5-cumylphenyl)methane, bis(3-(2H-benzotriazol-2-yl)-2-hydroxy-5-octylphenyl)methane, 1,1-bis(3-(2H-benzotriazol-2-yl)-2-hydroxy-5-methylphenyl)octane, 1,1-bis(3-(2H-5-chlorobenzotriazol-2-yl)-2-hydroxy-5-methylphenyl)octane, 1,2-ethanediyl bis(3-(2H-benzotriazol-2-yl)-2-hydroxybenzoate), 1,12-dodecanediyl bis(3-(2H-benzotriazol-2-yl)-4-hydroxybenzoate), 1,3-cyclohexanediyl bis(3-(5-chloro-2H-benzotriazol-2-yl)-2-hydroxybenzoate), 1,4-butanediyl bis(3-(2H-benzotriazol-2-yl)-4-hydroxy-5-methylphenylethanoate), 3,6-dioxa-1,8-octanediyl bis(3-(5-methoxy-2H-benzotriazol-2-yl)-4-hydroxyphenylethanoate), 1,6-hexanediyl bis(3-(3-(2H-benzotriazol-2-yl)-4-hydroxy-5-tert-butylphenyl)propionate), p-xylenediyl bis(3-(3-(2H-benzotriazol-2-yl)-4-hydroxyphenyl)propionate), bis(3-(2H-benzotriazol-2-yl)-4-hydroxytoluyl)malonate, bis(2-(3-(2H-benzotriazol-2-yl)-4-hydroxy-5-octylphenyl)ethyl)terephthalate, bis(3-(2H-benzotriazol-2-yl)-4-hydroxy-5-propyltoluyl)octadioate, 2-(2H-benzotriazol-2-yl)-6-phthalimido-methyl-4-methylphenol, 2-(2H-benzotriazol-2-yl)-6-phthalimido-ethyl-4-methylphenol, 2-(2H-benzotriazol-2-yl)-6-phthalimido-octyl-4-methylphenol, 2-(2H-benzotriazol-2-yl)-6-phthalimido-methyl-4-tert-butylphenol, 2-(2H-benzotriazol-2-yl)-6-phthalimido-methyl-4-cumylphenol, and 2-(2H-benzotriazol-2-yl)-4,6-bis(phthalimido-methyl)phenol. Among these, 2-(2-hydroxy-5-tert-octylphenyl)-2H-benzotriazole is preferable.

As the ultraviolet absorbent, the descriptions of paragraphs 0059 to 0062 of Japanese Patent Laid-Open No. 2016-216534, and the descriptions of paragraphs 0069 to 0082 of Japanese Patent Laid-Open No. 2018-178019 can be referred to, and the contents thereof are incorporated in the present description.

In the case where the resin composition of the present embodiments contains the ultraviolet absorbent, the content of the ultraviolet absorbent is, with respect to 100 parts by mass of the total of the polycarbonate resin (A), the polycarbonate resin (B) and the polycarbonate resin (C), preferably 0.01 to 1 part by mass. The content of the ultraviolet absorbent is, with respect to 100 parts by mass of the total of the polycarbonate resin (A), the polycarbonate resin (B) and the polycarbonate resin (C), more preferably 0.03 to 0.7 part by mass or higher and still more preferably 0.05 to 0.5 part by mass or higher.

The resin composition of the present embodiments may contain only one kind of the ultraviolet absorbent, or may contain two or more kinds. In the case of containing two or more kinds, it is preferable that total amount falls within the above range.

The resin composition of the present embodiments is regulated so that the total of the polycarbonate resin (A), the

polycarbonate resin (B) and the polycarbonate resin (C), and the other components to be blended as required becomes 100% by mass.

<Physical properties of the resin composition>

It is preferable that the hardness of the resin composition of the present embodiments is high. Specifically, the pencil hardness measured according to ISO 15184 is preferably HB or higher and more preferably F or higher. Then, the upper limit is not particularly specified, but is practically 3H or lower. Such a high pencil hardness can be attained by using the polycarbonate resin (B).

It is preferable that in the resin composition of the present embodiments, the color difference (ΔE) after molded articles are heat treated is low. Specifically, the resin composition of the present embodiments is molded to a test piece of 2 mm in thickness, and the difference in the hue (ΔE) before and after the heat treatment at 100°C for 30 hours is preferably 1.0 or smaller, more preferably 0.9 or smaller and still more preferably 0.7 or smaller. The lower limit of the ΔE is ideally 0, but even if it is 0.01 or higher, the required performance can sufficiently be attained. Such a low ΔE can be attained by reducing the content of Br element in the polycarbonate resin (A). Further by using, as the polycarbonate resin (A), one containing P element, a lower ΔE is attained. In particular, by precisely regulating the ratio of Br element/P element in the polycarbonate resin (A), a low ΔE is attained.

The ΔE is measured according to description in Examples described later.

<Method for producing the resin composition>

A method for producing the resin composition of the present embodiments involves melt kneading the polycarbonate resin (A) comprising the constitutional unit represented by the formula (1) and the polycarbonate resin (B) comprising the constitutional unit represented by the formula (2). A resin composition to be produced by the method for producing the resin composition of the present embodiments is preferably the resin composition of the present embodiments.

More specifically, the method for producing the resin composition of the present embodiments includes a method in which the polycarbonate resin (A), the polycarbonate resin (B) and the other components to be blended as required are previously mixed by using a mixing machine such as a tumbler or a Henschel mixer, and thereafter melt kneaded by a mixing machine such as a Banbury mixer, a roll, Brabender mixer, a single-screw kneading extruder, a twin-screw kneading extruder or a kneader. Here, the temperature of the melt kneading is not especially limited, but is usually in the range of 240 to 320°C.

<Molded articles>

The resin composition described above (for example, pellets) is molded into molded articles by various types of molding methods. The molded articles of the present embodiments are formed from the resin composition of the present embodiments. The shape of the molded articles is not especially limited, and can suitably be selected according to applications and purposes of the molded articles, and examples thereof include film shape, rod shape, cylindrical shape, annular shape, circular shape, elliptic shape, polygonal shape, profile shape, hollow shape, frame shape, box shape, panel shape and button shape.

A method of molding the molded articles is not especially limited, and a conventionally well-known molding method can be adopted, and examples thereof include an injection molding method, an injection compression molding method, an extrusion method, a profile extrusion method, a transfer molding method, a hollow molding method, a gas-assisted hollow molding method, a blow molding method, an extrusion blow molding method, an IMC (in-mold coating) molding method, a rotomolding method, a multilayer molding method, a two-color molding method, an insert molding method, a sandwich molding method, an expansion molding method, and a pressure molding method. The resin composition of the present embodiments is particularly suitable for molded articles obtained by an injection molding method, an injection compression molding method or an extrusion method. However, it is a matter of course that the resin composition of the present embodiments is not limited to molded articles obtained therefrom.

The molded articles of the present embodiments are suitably used for parts of electric and electronic devices, OA devices, personal digital assistants, mechanical parts, household electric appliances, vehicular parts, various types of vessels, illumination apparatuses, displays and the like.

Examples

The present invention will be described more specifically by way of Examples. The materials, the amounts used, the proportions, the treatment contents, the treatment procedures and the like shown in the following Examples can

suitably be changed without departing from the subject matter of the present invention. Accordingly, the scope of the present invention is not limited to specific examples shown below.

In the case where any measuring device or the like used in Examples is difficult to procure due to production abolishment or the like, the measurement can be carried out by using another device having the same performance.

1. Raw materials

The following raw materials shown in Table 1 and Table 3 were used.

[Table 1]

| | | Details |
|---|---|---|
| Recycled polycarbonate resin | A1 | A PCR-PC from meter covers as the major recovery source Trade name: PC116X (Hongy Co.)<br>Lot: 210626 |
| | A2 | A PCR-PC from meter covers as the major recovery source Trade name: PC116A (Hongy Co.)<br>Lot: 200727A |
| | A3 | A PCR-PC from discs as the major recovery source Trade name: PC7 5X (Hongy Co.)<br>Lot: 210623 |
| | A4 | A PCR-PC from headlamp lenses as the major recovery source Trade name: PC2010ANC (Shanghai Ausell Material Technology Co.)<br>Lot: SY20071902 |
| | A5 | A PCR-PC from headlamp lenses as the major recovery source Trade name: PC2010ANC (Shanghai Ausell Material Technology Co.)<br>Lot: A20091501 |
| A PCR-polycarbonate resin for comparison | AX1 | A PCR-PC from headlamp lenses as the major recovery source Trade name: PC2010BNC (Shanghai Ausell Material Technology Co.)<br>Lot: A20111601 |

The PCR-PC refer to recycled products of bisphenol A type polycarbonate resins.

The content of each metal element in the above polycarbonate resins was as follows.

[Table 2]

| | Elemental analysis (ppm by mass) | | | | | | | |
|---|---|---|---|---|---|---|---|---|
| | Br | P | Fe | Si | Cl | Al | S | Ca |
| A1 | - | 37 | 17 | 37 | | | | |
| A2 | 5 | 35 | 15 | 37 | | 8 | 8 | |
| A3 | - | 40 | 16 | 43 | | | | |
| A4 | - | 35 | 23 | 19 | 53 | | | |
| A5 | - | 42 | 15 | 23 | | | | |
| AX1 | 17 | 31 | 22 | 63 | 31 | | 11 | 15 |

<Method of measuring metal elements in the polycarbonate resin>

The quantitative determination (ppm by mass) of metal elements in the polycarbonate resin was carried out by an X-ray fluorescence analysis (XRF). For analysis, an X-ray fluorescence analyzer (manufactured by Rigaku Corp., trade name: ZSX Primus) was used, and Rh tube (4 kW) was used as a tube lamp. By using the 1 mm-thickness portion of a three-stepped test piece obtained by a method described later, EZ scan was carried out on an irradiation area of 20 mmϕ

thereon in a vacuum atmosphere.

[Table 3]

| Component | Symbol | Details |
|---|---|---|
| Polycarbonate resin (B) | B1 | A branched aromatic polycarbonate resin produced by a melt polymerization method using bisphenol C as a starting raw material<br>Viscosity-average molecular weight: 20,000, Hardness: 2H |
| | B2 | A branched aromatic polycarbonate resin produced by a melt polymerization method using bisphenol C as a starting raw material<br>Viscosity-average molecular weight: 26,000, Hardness: 2H |
| | B3 | A copolymer type aromatic polycarbonate resin of 2,2-bis(4-hydroxyphenyl)propane and 1,1-bis(4-hydroxy-3-methylphenyl)cyclohexane, synthesized according to Exemplary Production 3 of International Publication No. WO2022/071102<br>Copolymerization ratio (mass ratio): 44 : 56, Viscosity-average molecular weight: 18,000, Hardness: H |
| Polycarbonate resin (C) | C1 | A substantially linear aromatic polycarbonate resin produced by an interfacial polymerization using bisphenol A as a starting raw material<br>Viscosity-average molecular weight: 21,000, Hardness: 2B |
| Ultraviolet absorbent | D1 | 2-(2-hydroxy-5-(1,1,3,3-tetramethylbutyl)phenyl)benzotriazole, Shipro Kasei Kaisha, Ltd., trade name: Seesorb 709 |
| Stabilizer | E1 | tris(2,4-di-tert-butylphenyl)phosphite manufactured by Adeka Corp., trade name: ADK Stab 2112 |
| | E2 | 3-(4'-hydroxy-3',5'-di-tert-butylphenyl)propionate-n-octadecyl manufactured by Adeka Corp., trade name: ADK Stab AO-50 |
| | E3 | pentaerythritol tetrakis[3-(3,5-di-tert-butyl-4-hydroxyphenyl)propionate] manufactured by BASF AG, trade name: Irganox 1010 |
| Mold release agent | F1 | pentaerythritol tetrastearate manufactured by Emery Oleochemicals LLC, trade name: VPG861 |
| | F2 | stearyl stearate manufactured by NOF Corp., trade name: Unistar M-9676 |

<Production Example 1: Production of a polycarbonate resin B1>

26.14 mol (6.75 kg) of bisphenol C (BPC) and 26.79 mol (5.74 kg) of diphenyl carbonate were charged in an aluminum(SUS)-made reactor (internal volume: 10 L) equipped with a stirrer and a distillation condenser; the reactor inside was replaced by nitrogen gas; and the reactor was heated up to 220°C over 30 min in the nitrogen gas atmosphere.

Then, a reaction liquid in the reactor was stirred, and cesium carbonate ($Cs_2CO_3$) was added as a transesterification catalyst in the reaction liquid in a molten state so that the amount of cesium carbonate added became $1.5 \times 10^{-6}$ mol with respect to 1 mol of BPC; and the reaction liquid was stirred and aged at 220°C for 30 min in the nitrogen gas atmosphere. Then, the pressure in the reactor was reduced to 100 Torr over 40 min at the same temperature, and the reaction liquid was further reacted for 100 min to distill out phenol.

Then, the temperature of the reactor inside was raised up to 284°C over 60 min and the pressure was reduced to 3 Torr to distill out phenol in an amount equivalent to the nearly total amount of the theoretical amount of distillation. Then, the pressure of the reactor inside was held at lower than 1 Torr at the same temperature, and the reaction was continued further for 60 min and the polycondensation reaction was finished. At this time, the rotating speed of the stirrer was 38 rotations/min; the temperature of the reaction liquid right before the reaction finish was 289°C; and the stirring power was 1.00 kW.

Then, the reaction liquid as it was in the molten state was fed into a twin-screw extruder; butyl p-toluenesulfonate in an amount 4 mole times the amount of cesium carbonate was fed from the first feed throat of the twin-screw extruder and was kneaded with the reaction liquid; thereafter, the reaction liquid was extruded in a strand shape through the die of the twin-screw extruder, and cut by a cutter to thereby obtain pellets of a polycarbonate resin B1.

<Production Example 2: Production of a polycarbonate resin B2>

26.14 mol (6.75 kg) of bisphenol C (BPC) and 26.79 mol (5.74 kg) of diphenyl carbonate were charged in an aluminum(SUS)-made reactor (internal volume: 10 L) equipped with a stirrer and a distillation condenser; the reactor inside was replaced by nitrogen gas; and the reactor was heated up to 220°C over 30 min in the nitrogen gas atmosphere.
Then, a reaction liquid in the reactor was stirred, and cesium carbonate ($Cs_2CO_3$) was added as a transesterification catalyst in the reaction liquid in a molten state so that the amount of cesium carbonate added became $1.5 \times 10^{-6}$ mol with respect to 1 mol of BPC; and the reaction liquid was stirred and aged at 220°C for 30 min in the nitrogen gas atmosphere. Then, the pressure in the reactor was reduced to 100 Torr over 40 min at the same temperature, and the reaction liquid was further reacted for 100 min to distill out phenol.
Then, the temperature of the reactor inside was raised up to 284°C over 60 min and the pressure was reduced to 3 Torr to distill out phenol in an amount equivalent to the nearly total amount of the theoretical amount of distillation. Then, the pressure of the reactor inside was held at lower than 1 Torr at the same temperature, and the reaction was continued further for 60 min and the polycondensation reaction was finished. At this time, the rotating speed of the stirrer was 38 rotations/min; the temperature of the reaction liquid right before the reaction finish was 289°C; and the stirring power was 0.60 kW.
Then, the reaction liquid as it was in the molten state was fed into a twin-screw extruder; butyl p-toluenesulfonate in an amount 4 mole times the amount of cesium carbonate was fed from the first feed throat of the twin-screw extruder and was kneaded with the reaction liquid; thereafter, the reaction liquid was extruded in a strand shape through the die of the twin-screw extruder, and cut by a cutter to thereby obtain pellets of a polycarbonate resin B2.
2. Examples 1 to 11, Comparative Examples 1 to 3, and Reference Examples 1 to 7
Each component described in the above Table 1 was blended in a proportion described in the following Table 4 to Table 6 (numerical values corresponding to each component in Table 4 to Table 6 are in parts by mass), and mixed for 20 min by a tumbler; thereafter, the mixture was melt kneaded by using a twin-screw extruder ("TEM-26SX", manufactured by Shibaura Machine Co. Ltd.) at a cylinder temperature of 260°C at a discharge speed of 25 kg/h, and was strand cut to thereby obtain a resin composition (pellets).

<Measurement of the pencil hardness>

The pellets obtained in the above were dried at 100 °C for 5 hours, and by using an injection molding machine ("α-2000i-150B", manufactured by Fanuc Corp.), a flat plate-shape test piece (150 mm × 100 mm × 2 mm in thickness) was fabricated under the condition of at a set cylinder temperature of 260°C, a metal mold temperature of 70°C, a screw rotation speed of 100 rpm and an injection speed of 30 mm/s. For the flat plate-shape test piece, the pencil hardness was determined by being measured by using a pencil hardness tester at a load of 750 g according to ISO 15184.
The pencil hardness tester used was one manufactured by Toyo Seiki Seisaku-sho Ltd.

<ΔE>

The pellets obtained in the above were dried at 100°C for 5 hours by a hot air circulation type dryer, and thereafter injection molded into a three-stepped test piece (60 mm × 30 mm × 1 mm in thickness + 60 mm × 30 mm × 2 mm in thickness + 60 mm × 30 mm × 3 mm in thickness) by using an injection molding machine ("J55AD-60H", manufactured by Japan Steel Works, Ltd.) at a cylinder temperature of 280°C at a metal mold temperature of 80°C.
The obtained test piece was heated at 100°C for 330 hours; and the hues before and after the heating were measured by using a spectroscopic haze meter according to JIS Z8722, and the color difference ΔE thereof was calculated.
The spectroscopic haze meter used was an "SH7000", manufactured by Nippon Denshoku Industries Co. Ltd.

[Table 4]

| | | Examples | | | | | | |
|---|---|---|---|---|---|---|---|---|
| | | 1 | 2 | 3 | 4 | 5 | 6 | 7 |
| PC resin (A) | A1 | 65 | 65 | 65 | 65 | 30 | 85 | 15 |
| | A2 | | | | | | | |
| | A3 | | | | | | | |
| | A4 | | | | | | | |
| | A5 | | | | | | | |
| | AX1 | | | | | | | |
| PC resin (B) | B1 | 10 | 10 | 10 | 10 | 10 | 5 | 25 |
| | B2 | 25 | 25 | 25 | 25 | 25 | 10 | 60 |
| PC resin (C) | C1 | | | | | 35 | | |
| Br in (A) | ppm | 0 | 0 | 0 | 0 | 0 | 0 | 0 |
| P in (A) | ppm | 37 | 37 | 37 | 37 | 37 | 37 | 37 |
| Si in (A) | ppm | 37 | 37 | 37 | 37 | 37 | 37 | 37 |
| Fe in (A) | ppm | 17 | 17 | 17 | 17 | 17 | 17 | 17 |
| Br/P in (A) | | 0 | 0 | 0 | 0 | 0 | 0 | 0 |
| Ultraviolet absorbent | D1 | | 0.3 | | | | | |
| Stabilizer | E1 | 0.03 | 0.03 | 0.03 | 0.03 | 0.03 | 0.03 | 0.03 |
| | E2 | | | 0.1 | | | | |
| | E3 | | | | 0.1 | | | |
| Mold release agent | F1 | 0.3 | 0.3 | 0.3 | 0.3 | 0.3 | 0.3 | 0.3 |
| | F2 | 0.1 | 0.1 | 0.1 | 0.1 | 0.1 | 0.1 | 0.1 |
| Hardness | | F | F | F | F | F | HB | 2H |
| $\Delta E$ | | 0.6 | 0.4 | 0.3 | 0.4 | 0.4 | 0.6 | 0.8 |

[Table 5]

| | | Examples | | | | Comparative Examples | | |
|---|---|---|---|---|---|---|---|---|
| | | 8 | 9 | 10 | 11 | 1 | 2 | 3 |
| PC resin (A) | A1 | | | | | | | |
| | A2 | 65 | | | | | | |
| | A3 | | 65 | | | | | |
| | A4 | | | 65 | | | | |
| | A5 | | | | 65 | | | |
| | AX1 | | | | | 85 | 65 | 15 |
| PC resin (B) | B1 | 10 | 10 | 10 | 10 | 5 | 10 | 25 |
| | B2 | 25 | 25 | 25 | 25 | 10 | 25 | 60 |
| PC resin (C) | C1 | | | | | | | |
| Br in (A) | ppm | 8 | 0 | 0 | 0 | 17 | 17 | 17 |
| P in (A) | ppm | 35 | 40 | 35 | 42 | 31 | 31 | 31 |
| Si in (A) | ppm | 37 | 43 | 19 | 23 | 63 | 63 | 63 |

(continued)

| | | Examples | | | | Comparative Examples | | |
|---|---|---|---|---|---|---|---|---|
| | | 8 | 9 | 10 | 11 | 1 | 2 | 3 |
| Fe in (A) | ppm | 15 | 16 | 23 | 15 | 22 | 22 | 22 |
| Br/P in (A) | | 0.14 | 0 | 0 | 0 | 0.55 | 0.55 | 0.55 |
| Ultraviolet absorbent | D1 | | | | | | | |
| Stabilizer | E1 | 0.03 | 0.03 | 0.03 | 0.03 | 0.03 | 0.03 | 0.03 |
| | E2 | | | | | | | |
| | E3 | | | | | | | |
| Mold release agent | F1 | 0.3 | 0.3 | 0.3 | 0.3 | 0.3 | 0.3 | 0.3 |
| | F2 | 0.1 | 0.1 | 0.1 | 0.1 | 0.1 | 0.1 | 0.1 |
| Hardness | | F | F | F | F | HB | F | 2H |
| ΔE | | 0.7 | 0.5 | 0.5 | 0.3 | 1.5 | 1.4 | 1.2 |

[Table 6]

| | | Reference Examples | | | | | | |
|---|---|---|---|---|---|---|---|---|
| | | 1 | 2 | 3 | 4 | 5 | 6 | 7 |
| PC resin (A) | A1 | | 100 | | | | | |
| | A2 | | | 100 | | | | |
| | A3 | | | | 100 | | | |
| | A4 | | | | | 100 | | |
| | A5 | | | | | | 100 | |
| | AX1 | | | | | | | 100 |
| PC resin (B) | B1 | 30 | | | | | | |
| | B2 | 70 | | | | | | |
| PC resin (C) | C1 | | | | | | | |
| Br in (A) or (B) | ppm | 0 | 0 | 8 | 0 | 0 | 0 | 17 |
| P in (A) or (B) | ppm | 4 | 37 | 35 | 40 | 35 | 42 | 31 |
| Si in (A) or (B) | ppm | 21 | 37 | 37 | 43 | 19 | 23 | 63 |
| Fe in (A) or (B) | ppm | 16 | 17 | 15 | 16 | 23 | 15 | 22 |
| Br/P in (A) or (B) | | 0 | 0 | 0.14 | 0 | 0 | 0 | 0.55 |
| Ultraviolet absorbent | D1 | | | | | | | |
| Stabilizer | E1 | | | | | | | |
| | E2 | | | | | | | |
| | E3 | | | | | | | |
| Mold release agent | F1 | | | | | | | |
| | F2 | | | | | | | |
| Hardness | | 2H | 2B | 2B | 2B | 2B | 2B | 2B |
| ΔE | | 0.8 | 0.3 | 0.4 | 0.2 | 0.4 | 0.1 | 0.8 |

As is clear from the above results, the resin composition of the present embodiments gave molded articles maintaining a high hardness and simultaneously having a low ΔE after the heat treatment (Examples 1 to 11).

By contrast, in the cases where the content of Br element was high (Comparative Examples 1 to 3), ΔE ended in being high.

Example 12, Comparative Example 4

The same procedure was carried out as in Example 1, except for changing the kind and/or the amount of the polycarbonate resin (A) to (C) to those described in Table 7.

[Table 7]

| | | Example 12 | Comparative Example 4 |
|---|---|---|---|
| PC resin (A) | A1 | 50 | |
| | AX1 | | 50 |
| PC resin (B) | B3 | 50 | 50 |
| Br amount | ppm | 0 | 17 |
| ΔE | | 0.4 | 1.6 |

In the above Table 7, each of the Br amounts refer to amounts of a Br atom in the polycarbonate resins (A).
A method of measuring the Br atom amount was the method described in the above <Method of measuring metal elements in the polycarbonate resin>.
As is clear from the above results, even if the kind of the polycarbonate resin (B) comprising the constitutional unit represented by the formula (2) was changed, the same tendency as in Examples 1 to 11 and Comparative Examples 1 to 3 was observed (Example 12, Comparative Example 4).

## Claims

**1.** A resin composition, comprising:

a polycarbonate resin (A) comprising a constitutional unit represented by the formula (1); and
a polycarbonate resin (B) comprising a constitutional unit represented by the formula (2),
wherein the polycarbonate resin (A) is a recycled product; and
a content of Br element in the polycarbonate resin (A) is, with respect to 100 parts by mass of the polycarbonate resin (A), 10 ppm by mass or lower:

the formula (1)

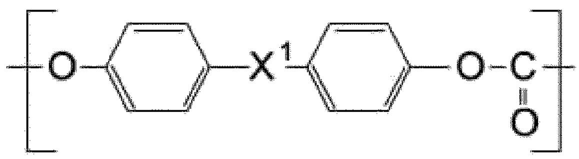

wherein $X^1$ represents either one of the following formulae:

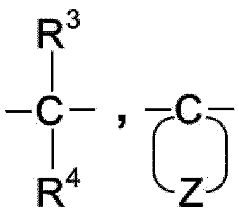

wherein $R^3$ and $R^4$ each independently represent a hydrogen atom or a methyl group; and Z represents a group to be bonded with C to form an alicyclic hydrocarbon having 6 to 12 carbon atoms and optionally having a substituent; and

the formula (2)

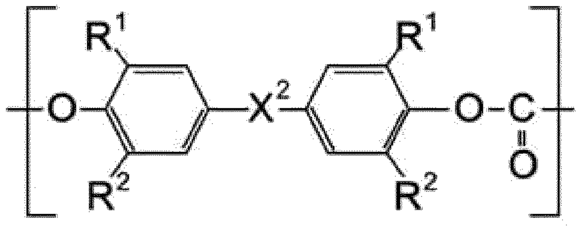

wherein $R^1$ represents a methyl group; $R^2$ represents a hydrogen atom or a methyl group; and $X^2$ represents either one of the following formulae:

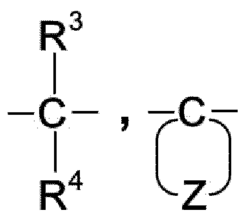

wherein $R^3$ and $R^4$ each independently represent a hydrogen atom or a methyl group; and Z represents a group to be bonded with C to form an alicyclic hydrocarbon having 6 to 12 carbon atoms and optionally having a substituent.

**2.** The resin composition according to claim 1, wherein the polycarbonate resin (A) comprises P element.

**3.** The resin composition according to claim 2, wherein a mass ratio of Br element/P element in the polycarbonate resin (A) is 0 to 1.0.

**4.** The resin composition according to claim 1 or 2, wherein the polycarbonate resin (A) comprises Fe element.

**5.** The resin composition according to claim 1 or 2, wherein the polycarbonate resin (A) comprises Si element.

**6.** The resin composition according to claim 1 or 2, wherein in

the formula (2), $R^2$ is a hydrogen atom; $X^2$ is

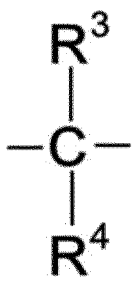

, and $R^3$ and $R^4$ are methyl groups.

**7.** A pellet of the resin composition according to claim 1 or 2.

**8.** A molded article, being formed from the resin composition according to claim 1 or 2.

**9.** A method for producing a resin composition, comprising

melt kneading a polycarbonate resin (A) comprising a constitutional unit represented by the formula (1); and a polycarbonate resin (B) comprising a constitutional unit represented by the formula (2),

wherein the polycarbonate resin (A) is a recycled product; and
a content of Br element in the polycarbonate resin (A) is, with respect to 100 parts by mass of the polycarbonate resin (A), 10 ppm by mass or lower:

the formula (1)

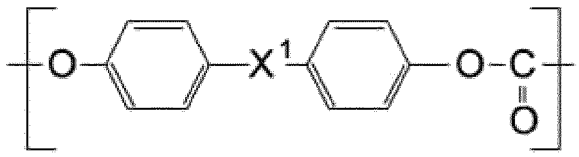

wherein $X^1$ represents either one of the following formulae:

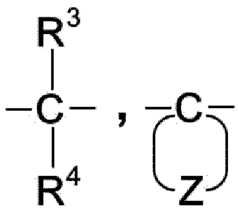

wherein $R^3$ and $R^4$ each independently represent a hydrogen atom or a methyl group; and Z represents a group to be bonded with C to form an alicyclic hydrocarbon having 6 to 12 carbon atoms and optionally having a substituent; and
the formula (2)

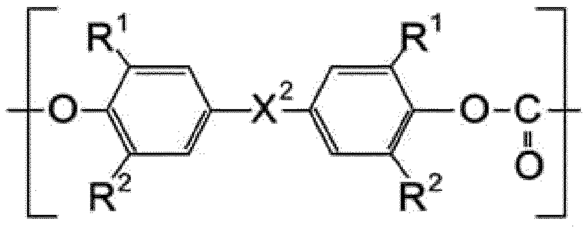

wherein $R^1$ represents a methyl group; $R^2$ represents a hydrogen atom or a methyl group; and $X^2$ represents either one of the following formulae:

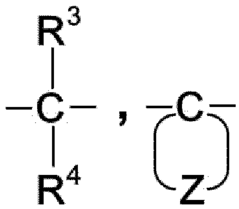

wherein $R^3$ and $R^4$ each independently represent a hydrogen atom or a methyl group; and Z represents a group to be bonded with C to form an alicyclic hydrocarbon having 6 to 12 carbon atoms and optionally having a substituent.

**10.** A method for producing the resin composition according to claim 1 or 2, comprising

melt kneading a polycarbonate resin (A) comprising a constitutional unit represented by the formula (1); and a polycarbonate resin (B) comprising a constitutional unit represented by the formula (2),
wherein the polycarbonate resin (A) is a recycled product; and
a content of Br element in the polycarbonate resin (A) is, with respect to 100 parts by mass of the polycarbonate resin (A), 10 ppm by mass or lower.

**INTERNATIONAL SEARCH REPORT**

International application No. **PCT/JP2023/012893**

**A. CLASSIFICATION OF SUBJECT MATTER**

***C08L 69/00***(2006.01)i; ***C08G 64/06***(2006.01)i
FI: C08L69/00; C08G64/06

According to International Patent Classification (IPC) or to both national classification and IPC

**B. FIELDS SEARCHED**

Minimum documentation searched (classification system followed by classification symbols)

C08L69/00; C08G64/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2021-188011 A (MITSUBISHI ENGINEERING PLASTICS CORP.) 13 December 2021 (2021-12-13) claims, paragraph [0043], examples | 1-10 |
| A | US 2022/0064439 A1 (SHPP GLOBAL TECHNOLOGIES B.V.) 03 March 2022 (2022-03-03) claims, examples | 1-10 |
| A | US 2014/0200302 A1 (SABIC INNOVATIVE PLASTICS IP B.V.) 17 July 2014 (2014-07-17) claims, examples | 1-10 |
| A | WO 2022/004058 A1 (MITSUBISHI ENGINEERING PLASTICS CORP.) 06 January 2022 (2022-01-06) claims, examples | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 June 2023** | **20 June 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/012893**

| Patent document cited in search report | Publication date (day/month/year) | Patent family member(s) | Publication date (day/month/year) |
|---|---|---|---|
| JP 2021-188011 A | 13 December 2021 | (Family: none) | |
| US 2022/0064439 A1 | 03 March 2022 | EP 3683271 A1 | |
| | | KR 10-2021-0113288 A | |
| | | CN 113454162 A | |
| US 2014/0200302 A1 | 17 July 2014 | EP 2943534 A1 | |
| | | CN 104937033 A | |
| | | KR 10-2015-0105350 A | |
| WO 2022/004058 A1 | 06 January 2022 | TW 202212086 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001226576 A
- WO 2000029461 A
- WO 2017099226 A
- JP 2011046769 A
- JP 2016216534 A
- JP 2018095706 A
- JP 2018178019 A
- WO 2022071102 A